# EUROPÄISCHE PATENTSCHRIFT

(11) **EP 3 281 823 B1**
(45) Veröffentlichungstag und Bekanntmachung des Hinweises auf die Patenterteilung: **29.01.2020**
(21) Anmeldenummer: 17185275.9
(22) Anmeldetag: 08.08.2017
(51) Int. Cl.: B60P 1/44

(54) **HUBLADEBÜHNE BEI EINEM KRAFTFAHRZEUG UND VERFAHREN ZUM BETREIBEN EINER HUBLADEBÜHNE**
LOADING PLATFORM FOR A MOTOR VEHICLE AND METHOD FOR OPERATING SAME
HAYON ÉLÉVATEUR POUR UN VÉHICULE AUTOMOBILE ET SON PROCÉDÉ DE FONCTIONNEMENT

(30) Priorität: 10.08.2016 DE 102016114845
(43) Veröffentlichungstag der Anmeldung: 14.02.2018
(73) Patentinhaber: Bär Management- und Beteiligungsgesellschaft mbH, 74078 Heilbronn (DE)
(72) Erfinder: BAR,Tobias, 74078 Heilbronn (DE); KLINK, Norman, 74243 Langenbrettach (DE)
(74) Vertreter: DREISS Patentanwälte PartG mbB

(56) Entgegenhaltungen:
- DE-A1-102014 009 242
- US-A1- 2010 293 611

## Beschreibung

Die Erfindung betrifft eine Hubladebühne bei einem Kraftfahrzeug, mit einem durch Anschlusskomponenten an das Kraftfahrzeug montierbaren Hub- und Schwenkwerk, welches motorisch, insbesondere hydraulisch antreibbar ist, mit einer durch das Hub- und Schwenkwerk heb- und senkbaren Plattform, die in allen Hubstellungen in einer gewählten Lage haltbar ist, wobei die Plattform außerdem im auf Niveau eines Laderaums des Kraftfahrzeugs angehobenen Zustand von einer horizontalen Schwenkstellung in eine vertikale Schwenkstellung schwenkbar ist, in der sie den Laderaum des Kraftfahrzeugs verschließt oder hinter einer den Laderaum verschließenden Tür positioniert ist, und umgekehrt von der vertikalen Schwenkstellung in die horizontale Schwenkstellung schwenkbar ist, oder wobei die Plattform in eine Verstaustellung unterhalb des Laderaums des Kraftfahrzeugs bringbar ist und hierbei zueinander schwenkbare Plattformbereiche gegeneinander verschwenkt und gefaltet werden, und mit einem Antrieb für das Hub- und Schwenkwerk, und mit einer elektrischen oder elektronischen Steuereinrichtung mittels derer das Heben und Senken und Verschwenken der Plattform oder von Plattformteilen gesteuert wird, und mit einer Fernbedienung zur Fernsteuerung der Steuereinrichtung auf Basis drahtloser und insbesondere digital codierter Kommunikation mit wenigstens einem und vorzugsweise mehreren durch Bedienpersonen mitführbaren Handbedienteilen mit einer jeweiligen das Handbedienteil individualisierenden Identifizierungsinformation, im Sinne einer identifizierenden Kennung, und mit einem der Steuereinrichtung zugeordneten Sende/Empfangsteil, wobei das jeweilige Handbedienteil und das Sende/Empfangsteil Sende-/Empfangseinrichtungen umfassen, die ausgebildet sind, miteinander drahtlos zu kommunizieren.

Bis in die jüngere Vergangenheit wurden Hubladebühnen dadurch bedient, dass zunächst entweder vom Fahrerhaus aus oder mittels eines Schlüssels an einer Bedienkonsole am hinteren Ende des Fahrzeugs eine Versorgung der Steuereinrichtung der Hubladebühne mit Steuerspannung eingeschaltet wurde. Sodann konnten durch eine Bedienperson typischerweise mittels beidhändiger Bedienung von an der Bedienkonsole vorgesehenen Schwenkhebeln die verschiedenen Funktionen des Hub- und Schwenkwerks angesteuert und ausgeführt werden, also insbesondere das Verschwenken der Plattform zwischen der vertikalen und der horizontalen Schwenkstellung und das Heben und Senken der Plattform in ihrer horizontalen Schwenkstellung zwischen dem Niveau des Ladebodens des Aufbaus und des Erdbodens oder einer Zwischenposition.

DE 10 2014 009 242 A1 und US 2010/293611 A1 offenbaren Aspekte drahtloser Kommunikation in Bezug auf Zugfahrzeuge und Anhängerfahrzeuge.

Insbesondere durch die Anmelderin ist auch schon eine Hubladebühne der eingangs beschriebenen Art bekannt geworden, bei der eine Fernbedienung zur Fernsteuerung der elektrischen oder elektronischen Steuereinrichtung vorgesehen ist.

Beim Betreiben einer Hubladebühne mit einer Fernbedienung oder Fernbedienungseinrichtung mit einem Handbedienteil und einem Sende/Empfangsteil, wie eingangs erwähnt, stellt sich die Aufgabe, dass das Handbedienteil mit dem Sende/Empfangsteil der Steuereinrichtung der Hubladebühne "gekoppelt" werden muss, damit eine Fernsteuerung der Steuereinrichtung der Hubladebühne durch das Handbedienteil überhaupt möglich ist. Der Begriff des "Koppelns" oder der Kopplung von Handbedienteil und Sende/Empfangsteil oder Steuereinrichtung bedeutet vorliegend, dass die beiden Teile derart aufeinander abgestimmt sind, dass ein Signalaustausch zum Initiieren von Fernsteuerungsmaßnahmen überhaupt führen kann. Das Handbedienteil und das Sende/Empfangsteil der Steuereinrichtung "erkennen" einander im gekoppelten Zustand als zur Ausführung von Steuerungsmaßnahmen autorisierte Geräteeinheiten an. Beispielsweise ist dem Sende/Empfangsteil bzw. der Steuereinrichtung hierfür eine identifizierende Information oder identifizierende Kennung (ID) des Handbedienteils bekannt und dort abgelegt, die bei Signalaustausch mitübertragen und als solche erkannt werden kann. Im gekoppelten Zustand des Handbedienteils werden von diesem ausgesandte Fernbedienungssignale, die ein Sende/Empfangsteil der Steuereinrichtung erhält, dann als zulässige Steuersignale akzeptiert und über die zugeordnete Steuereinrichtung der Hubladebühne zur Verstellung der Komponenten des Hub- und Schwenkwerks umgesetzt. Die Herbeiführung einer Kopplung zwischen Handbedienteil und Steuereinrichtung erfordert derzeit umfangreiche durch eine Bedienperson auszuführende Konfigurationsmaßnahmen oder alternativ die Bereitstellung von einem jeweiligen Fahrzeug fest zugeordneten und mit diesen werksseitig gekoppelten Handbedienteilen, was sich in der Praxis als unkomfortabel und schwer handhabbar erweist. Es besteht auch die grundsätzliche Gefahr, dass beim Herstellen einer Kopplung eines Handbedienteils mit einer Steuereinrichtung bzw. mit deren Sende/Empfangsteil versehentlich eine Kopplung mit Komponenten eines anderen daneben stehenden Fahrzeugs ausgeführt wird.

Der vorliegenden Erfindung liegt die Aufgabe zugrunde, eine Hubladebühne der eingangs beschriebenen Art und deren Fernbedienung sowie ein Verfahren zum Betreiben einer Hubladebühne komfortabler und für den Benutzer einfacher zu gestalten, wobei Fehlbedienungen dennoch weitestgehend ausgeschlossen werden sollen.

Diese Aufgabe wird bei einer Hubladebühne der eingangs genannten Art erfindungsgemäß dadurch gelöst, dass eine im Bereich des Fahrerhauses des Kraftfahrzeugs angeordnete Prüfeinrichtung vorgesehen ist, die zur Feststellung ausgebildet ist, ob sich ein Handbedienteil in einem Nahbereich der Prüfeinrichtung befindet, und dass in der Prüfeinrichtung und in der Steuereinrichtung eine gemeinsame Autorisierungsinformation, insbesondere werksseitig, ablegbar ist, und dass die Prüfeinrichtung und das Handbedienteil derart zusammenwirken dass diese Autorisierungsinformation von der Prüfeinrichtung an das Handbedienteil automatisch übergeben wird, wenn sich das Handbedienteil in dem Nahbereich der Prüfeinrichtung befindet, und dass das Handbedienteil zur drahtlosen Übermittlung der Autorisierungsinformation und einer das Handbedienteil individualisierenden Identifizierungsinformation an das Sende/Empfangsteil der Steuereinrichtung ausgebildet ist, und dass die Steuereinrichtung zur Überprüfung ausgebildet ist, ob die drahtlos übermittelte Autorisierungsinformation mit der bei ihr abgelegten Autorisierungsinformation übereinstimmt, und dass die Steuereinrichtung in diesem Fall eine automatische Kopplung des Sende/Empfangsteils mit dem Handbedienteil ausführt, derart dass das Handbedienteil als zur Ausführung von Fernsteuerungsmaßnahmen autorisiertes Gerät angesehen wird. Hierfür wird dann die das Handbedienteil individualisierende Identifizierungsinformation, also insbesondere deren identifizierende Kennung in der Telekommunikation, Serialnummer oder Hardware-Adresse, bei der Steuereinrichtung abgelegt, damit bei einer nachfolgenden durch das Handbedienteil initiierten drahtlosen Kommunikation das Handbedienteil als zur Ausführung von Fernsteuerungsmaßnahmen autorisiertes Gerät erkannt und zugelassen werden kann. Wenn hingegen die vom Handbedienteil an die Steuereinrichtung übermittelte Autorisierungsinformation mit der bei der Steuereinrichtung abgelegten Autorisierungsinformation nicht codierungsmäßig übereinstimmt, wird keine Kopplung ausgeführt. Auf diese Weise können Fehlkopplungen mit nebenstehenden Fahrzeugen oder mit Handbedienteilen von nebenstehenden Fahrzeugen vermieden werden.

Mit der Erfindung wird also vorgeschlagen und ermöglicht, dass zur Ausführung einer Kopplung eines Handbedienteils mit der Steuereinrichtung bzw. deren Sende/Empfangsteil eine Bedienperson ein Handbedienteil lediglich in einen Nahbereich der Prüfeinrichtung bringt, damit eine Kopplung dieses Handbedienteils mit der Steuereinrichtung ausgeführt wird, und zwar vorzugsweise automatisch. Dies eröffnet die weitere Möglichkeit, dass eine Mehrzahl von Bedienpersonen, also insbesondere mehrere Kraftfahrer eines Speditionsunternehmens oder Fuhrparks, jeweils über ein ihnen zugeordnetes Handbedienteil verfügen können, welches dann auch bei wechselnder Zuordnung der Bedienperson zu Kraftfahrzeugen stets zur Fernbedienung der betreffenden Hubladebühne einsetzbar ist, und zwar ohne dass von der Bedienperson aufwändige Konfigurationsmaßnahmen ausgeführt werden müssen.

Bei der Autorisierungsinformation kann es sich um eine an sich beliebige Information im Sinne einer Kodierung handeln, die aber vorzugsweise einmalig sein sollte, damit sie sich für eine Freigabe- oder Autorisierungsprüfung eignet. Es kann sich als vorteilhaft erweisen, wenn die Autorisierungsinformation eine identifizierende Kennung der Prüfeinrichtung oder eine identifizierende Kennung der Steuereinrichtung, also deren jeweilige Identifizierunginformation für Telekommunikationszwecke ist, die ja ohne weiteres verfügbar und überdies eindeutig und für drahtlose Telekommunikation geeignet ist. Bei einer bevorzugten Ausführungsform wird als Autorisierungsinformation eine identifizierende Kennung der Prüfeinrichtung verwendet, die auch in der Steuereinrichtung abgelegt ist. Dieses Ablegen der Autorisierungsinformation kann beispielsweise werksseitig bei der Installation der Hubladebühne an dem Kraftfahrzeug erfolgen oder auch zu einem späteren Zeitpunkt durch hierzu befähigte Personen. Die abrufbare Ablage oder Speicherung der Autorisierungsinformation bei der Prüfeinrichtung und bei der Steuereinrichtung kann durch hierzu befähigte Personen vorzugsweise unter Verwendung eines mit der Steuereinrichtung gekoppelten Handbedienteils oder in sonstiger Weise durch Kommunikation über an sich beliebige Schnittstellen erfolgen.

Es erweist sich weiter als vorteilhaft, wenn die Steuereinrichtung und das Handbedienteil so ausgebildet sind, dass die Steuereinrichtung und deren Sende/Empfangsteil zu einer Zeit nur mit einem einzigen Handbedienteil gekoppelt sein kann derart, dass dieses Handbedienteil als zur Ausführung von Fernsteuerungsmaßnahmen autorisiertes Gerät angesehen wird. Hierdurch eignet sich die erfindungsgemäße Ausbildung der Hubladebühne und ihrer Fernbedienung in besonderem Maße für die Anwendung durch mehrere Personen, die mit jeweiligen Handbedienteilen ausgerüstet sind und wechselnden Kraftfahrzeugen zugeordnet werden. Wenn eine Bedienperson mit ihrem individuellen Handbedienteil Zugang zu einem ihr neu zugeordneten Kraftfahrzeug nimmt, so gelangt das Handbedienteil hierdurch in den Nahbereich der Prüfeinrichtung mit der Folge, dass die Autorisierungsinformation an das Handbedienteil übertragen wird und im Anschluss hieran vorzugsweise automatisch eine Kopplung des Handbedienteils mit der Steuereinrichtung der Hubladebühne ausgeführt wird. Dabei wird eine in der Steuereinrichtung etwa hinterlegte Identifizierungsinformation des Handbedienteils der zuletzt tätigen Bedienperson gelöscht bzw. durch die neue Identifizierungsinformationen überschrieben. Hierdurch kann sichergestellt werden, dass die Hubladebühne stets durch ein jeweiliges Handbedienteil einer gerade tätigen und hierzu ermächtigten Bedienperson durch Fernbedienung betätigt werden kann.

Die Prüfeinrichtung kann zweckmäßigerweise eine Aufnahmeeinrichtung zur körperlichen Aufnahme des Handbedienteils umfassen; es kann sich hierbei also insbesondere um eine Aufnahmeschale oder Aufnahmevertiefung handeln, die an vorzugsweise gut zugänglicher Stelle im Fahrerhaus des Kraftfahrzeugs vorgesehen ist. Über die Aufnahmeeinrichtung könnten zugleich eine Ladefunktion für die Akkus des Handbedienteils ausgeführt werden, was aber rein beispielhaft ist. Die Prüfeinrichtung könnte auch ausschließlich zur Feststellung der Anwesenheit des Handbedienteils in einem Nahbereich und zur Übergabe der Autorisierungsinformation ausgebildet sein. Der Nahbereich sollte hierbei zweckmäßigerweise auf Entfernungen innerhalb des Fahrerhauses beschränkt sein oder auch auf deutlich geringere Entfernungen im Bereich von beispielsweise 50 cm oder 40 cm oder 30 cm oder 10 cm. Auf diese Weise ist es dann möglich, dass sich im Fahrerhaus zwei Bedienpersonen mit einem jeweiligen Handbedienteil aufhalten können, jedoch nur ein Handbedienteil intendiertermaßen in den Nahbereich der Prüfeinrichtung gebracht wird.

Die Prüfeinrichtung ist beispielsweise ausgebildet, über elektrische Kontakte oder über drahtlose Kommunikation, insbesondere Transpondertechnik oder Funk oder Infrarot, festzustellen, ob sich ein Handbedienteil in dem Nahbereich der Prüfeinrichtung befindet.

Weiter ist die Prüfeinrichtung beispielsweise ausgebildet, über elektrische Kontakte oder über drahtlose Kommunikation, insbesondere Transpondertechnik oder Funk oder Infrarot, mit dem Handbedienteil zu kommunizieren, um die Autorisierungsinformationen von der Prüfeinrichtung an das Handbedienteil zu übergeben.

Die Prüfeinrichtung könnte zumindest grundsätzlich zugangsgesichert an beliebiger Stelle des Kraftfahrzeugs, etwa in einer abschließbaren Box, untergebracht sein. Demgegenüber erweist sich als vorteilhaft, wenn die Prüfeinrichtung - wie vorausgehend schon angesprochen - in einem abschließbaren Fahrerhaus des Kraftfahrzeugs angeordnet ist, wo sie nur für eine autorisierte Bedienperson zugänglich ist.

Weiter erweist sich als vorteilhaft, wenn das Handbedienteil ausgebildet ist, eine Versorgung der Steuereinrichtung mit Steuerspannung und damit die Betriebsbereitschaft der Hubladebühne einzuschalten und vorzugsweise auch wieder auszuschalten, sobald die Kopplung des Handbedienteils mit dem Sende/Empfangsteil der Steuereinrichtung ausgeführt ist.

Weiter erweist es sich als vorteilhaft, wenn die Hubladebühne weiter gekennzeichnet ist durch eine mit der Steuereinrichtung zusammenwirkenden Einrichtung zur Erfassung der Hub- und/oder Schwenkstellung der Plattform und dadurch, dass die Steuereinrichtung zur Meldung der Hub- und/oder Schwenkstellung der Plattform an das Handbedienteil mittels Kommunikation über die Fernbedienung ausgebildet ist und dass die Hub- und/oder Schwenkstellung der Plattform an dem Handbedienteil visuell und/oder akustisch anzeigbar oder durch Vibration vermittelbar ist.

Gegenstand der Erfindung ist auch ein Verfahren zum Betreiben einer Hubladebühne mit den Merkmalen des Anspruchs 10. Bevorzugte Weiterbildungen sind Gegenstand der Ansprüche 11-16.

Weitere Einzelheiten, Merkmale und Vorteile der Erfindung ergeben sich aus den beigefügten Patentansprüchen und aus der zeichnerischen Darstellung und der nachfolgenden Beschreibung einer vorteilhaften Ausführungsform der erfindungsgemäßen Hubladebühne. In der Zeichnung zeigt:
Figur 1 eine schematische Darstellung einer Hubladebühne;
Figur 2 eine schematische Darstellung einer Steuereinrichtung und Fernbedienung bei einer erfindungsgemäßen Hubladebühne; und
Figur 3 eine schematische Darstellung eines Kraftfahrzeugs mit einer erfindungsgemäßen Hubladebühne.

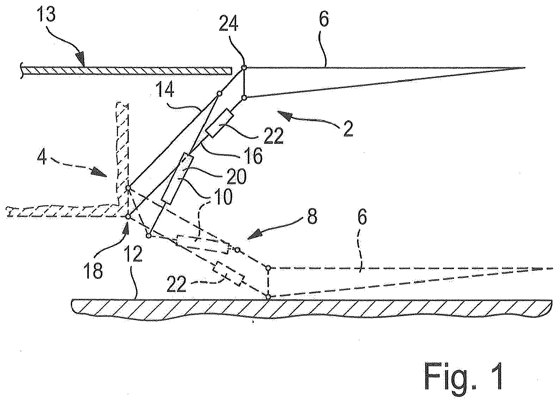

Figur 1 zeigt eine Hubladebühne 2, die an einem Heckbereich 4 eines Kraftfahrzeugs, beispielsweise eines Lastkraftfahrzeugs, angebaut ist. Eine Plattform 6 der Hubladebühne 2 ist von einem im bevorzugt dargestellten Fall parallelogrammförmig ausgebildeten Hub- und Schwenkwerk 8 so gehalten, dass sie mittels wenigstens eines Hubzylinders 10 heb- und senkbar ist und dabei ihre im wesentlichen horizontale Lage beibehält. Das in Figur 1 nur schematisch dargestellte Hub- und Schwenkwerk 8 ist beidseits links und rechts des Kraftfahrzeugs vorgesehen, wobei nicht zwingend auf jeder Seite die noch zu erläuternden Zylinder 10 vorgesehen werden müssen.

In Figur 1 ist die Plattform 6 mitsamt dem Hub- und Schwenkwerk 6 mit durchgezogenen Linien in einer gegenüber einer Grundfläche 12, auf der das Kraftfahrzeug abgestellt ist, angehobenen Lage dargestellt. Auch die Ladeebene 13 des Fahrzeugaufbaus ist dargestellt. Die gestrichelte Darstellung zeigt die auf die Grundfläche 12 abgesenkte Plattform 6 und die entsprechende Lage des Hub- und Schwenkwerks 8.

Das Hub- und Schwenkwerk 8 umfasst beidseits je einen oberen Tragarm 14, der die obere Strebe eines Parallelogramms bildet, und einen unteren Arm 16, der die untere Strebe des Parallelogramms bildet. Der obere Tragarm 14 und der untere Arm 16 sind über nicht im einzelnen dargestellte Anschlusskomponenten 18 schwenkbar am Kraftfahrzeug angeordnet. Diese Anschlusskomponenten 18 umfassen beispielsweise einen Querträger, an dem sämtliche Komponenten des Hub- und Schwenkwerks 8 gehalten sind und der insgesamt beispielsweise an Längsträgern des Kraftfahrzeugs montierbar ist. Die Tragarme 14, 16 sind an ihrem kraftfahrzeugabgewandten Ende jeweils gelenkig mit der Plattform 6 verbunden. Gegen den oberen Tragarm 14 stützt sich der Hubzylinder 20 ab; er stützt sich fahrzeugseitig gelenkig gegen die Anschlusskomponenten 18 der Hubladebühne ab. In dem unteren Tragarm 16 des Hub- und Schwenkwerks 8 ist ein Neige- oder Parallelzylinder 22 vorgesehen, mittels dessen die Länge des unteren Tragarms 16 verstellbar ist. Hierdurch lässt sich die Plattform 6 um eine horizontale Achse 24 nach oben oder unten neigen und weiter in ihre vertikale Stellung, die sogenannte Fahrstellung, schwenken, in der sie den Aufbau des Kraftfahrzeugs verschließt, wenn keine zusätzlichen Türen vorgesehen sind.

Durch das im beispielhaft dargestellten Fall parallelogrammförmig ausgebildete Hub- und Schwenkwerk 8 behält die Plattform 6 beim Heben und Senken ihre im wesentlichen horizontale Lage bei.

Die Erfindung kann jedoch auch in Verbindung mit anderen Arten von Hubladebühnen, beispielsweise in Verbindung mit einem Vertikallift oder einer Hubladebühne mit einem elektromagnetisch betätigten Hub- und Schwenkwerk, angewendet werden.

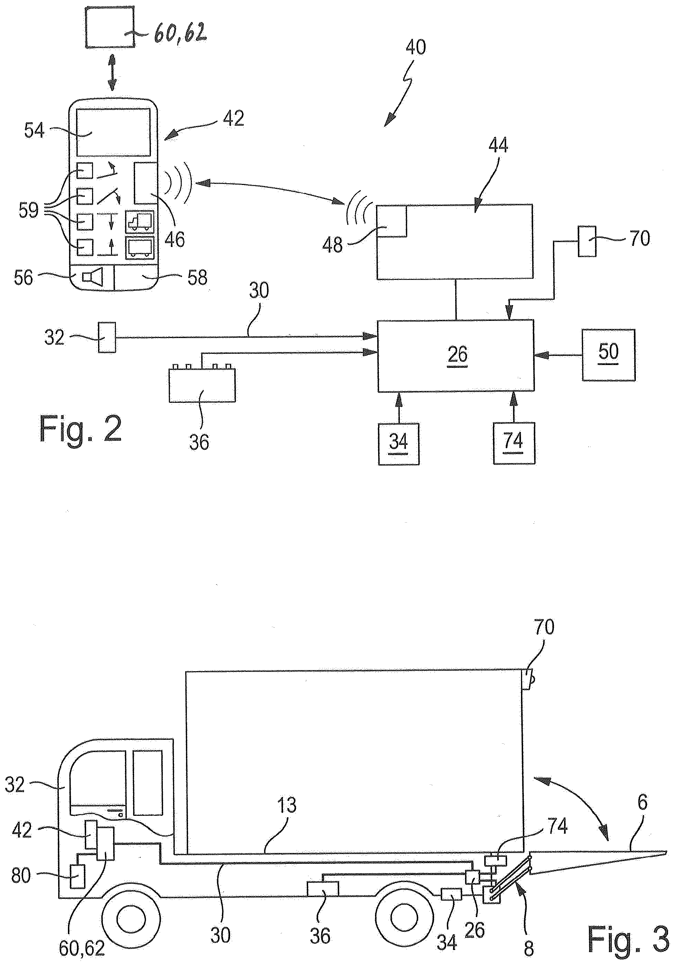

Die Hubladebühne weist eine in Figuren 2 und 3 dargestellte elektrische oder elektronische Steuereinrichtung 26 auf, mittels derer die Komponenten des Hub- und Schwenkwerks 8 angesteuert und verstellt werden.

Wie in Figuren 2 und 3 schematisch dargestellt ist die Steuereinrichtung 26 bei vorbekannten Hubladebühnen typischerweise über eine Festverdrahtung oder Verkabelung 30 mit dem Fahrerhaus 32 des Kraftfahrzeugs verbunden. Über diese Festverdrahtung oder Verkabelung 30 wird bei vorbekannten Hubladebühnen eine Versorgung der Steuereinrichtung 26 mit Steuerspannung und damit die Betriebsbereitschaft der Hubladebühne vom Fahrerhaus 32 des Kraftfahrzeugs aus eingeschaltet und auch wieder ausgeschaltet. Alternativ kann dies mittels einer Schlüsselschaltung ausgehend von einer externen Bedienkonsole 34 in der Nähe der Hubladebühne 2 erfolgen. Hierdurch wird also die Steuereinrichtung 26 und damit auch die Antriebskomponenten für das Hub- und Schwenkwerk 8 mit Steuerspannung aus einer Spannungsquelle 36 des Kraftfahrzeugs versorgt beziehungsweise wieder von der Spannungsquelle 36 getrennt.

Bei der hier in Rede stehenden erfindungsgemäßen Hubladebühne ist eine insgesamt mit dem Bezugszeichen 40 bezeichnete Fernsteuerung oder Fernsteuerungseinrichtung vorgesehen, die ein durch den Bediener mitführbares Handbedienteil 42 und ein der Steuereinrichtung 26 zugeordnetes Sende/Empfangsteil 44 umfasst, die jeweils eine Sende-/Empfangseinrichtung 46, 48 aufweisen, welche auf Basis drahtloser und vorzugsweise digital codierter Kommunikation, also insbesondere funkbasiert arbeiten, wobei wenigstens grundsätzlich auch eine Infrarotkommunikation denkbar wäre.

Die Hubladebühne 2 umfasst ferner eine Einrichtung 50 zur Erfassung der Hub- und/oder Schwenkstellung der Plattform 6 der Hubladebühne, wobei diese Einrichtung 50 in an sich beliebiger Weise mittels an sich beliebiger Sensoren ausgebildet sein kann, solange sie die erfassten Informationen zur Hub- und/oder Schwenkstellung der Plattform 6 und damit des Hub- und Schwenkwerks 8 an die Steuereinrichtung 26 in weiterverarbeitbarer oder auswertbarer Form weiterzugeben vermag. Die Steuereinrichtung 26 ist zur Meldung der Hub- und/oder Schwenkstellung der Plattform 6 an das Handbedienteil 42 mittels drahtloser Kommunikation über die Fernbedienung 40 ausgebildet.

Hierfür bedarf es insbesondere einer Kopplung des Handbedienteils 42 mit dem Sende/Empfangsteil 44, derart, dass das Handbedienteil bei dem Sende/Empfangsteil 44 als autorisiertes Bediengerät individualisiert ist.

Sodann bedarf es bei einer beispielhaften Ausführungsform einer sogenannten Anmeldung des Handbedienteils 42 bei dem Sende/Empfangsteil 44 der Steuereinrichtung 26, um über die Fernsteuerung 40 eine Verstellung des Hub-und Schwenkwerks 8 vornehmen zu können.

Vorteilhafterweise kann folgendes vorgesehen sein: Nach Anmeldung des Handbedienteils 42 an dem Sende/Empfangsteil 44, und zwar entweder unmittelbar hieran anschließend oder erst wenn ausgehend von dem Handbedienteil 42 eine aktive Ansteuerung zum Verstellen des Hub- und Schwenkwerks 8 vorgenommen werden soll, wird über die Steuereinrichtung 26 und das Sende/Empfangsteil 44 die momentane Hub- und/oder Schwenkstellung der Plattform 6 an das Handbedienteil 42 mittels drahtloser Kommunikation gesandt. Das Handbedienteil 42 beziehungsweise dessen Sende-/Empfangseinrichtung 46 empfängt diese drahtlose Information und bringt die Hub- und/oder Schwenkstellung auf dem Handbedienteil 42 zur Anzeige. Dies kann visuell über ein Display 54 oder akustisch über einen Lautsprecher 56 und/oder durch Vibration mittels einer Vibrationseinrichtung 58 erfolgen. Im Anschluss an diese Übermittlung der Hub- und/oder Schwenkstellung und deren Anzeige durch das Handbedienteil 42 lässt sich durch Betätigung von Steuertasten 59 mittels der Fernsteuerung 40 das Hub- und Schwenkwerk 8 der Hubladebühne 2 verstellen.

Eine andere oder weitere Verstellung der Hub- und/oder Schwenkstellung der Plattform 6 über die Fernbedienung 40 ist beispielsweise erst nach Erhalt einer weiteren Meldung der aktuellen Hub- und/oder Schwenkstellung der Plattform 6 bei dem Handbedienteil 42 und vorzugsweise erst nachdem diese neue Hub- und/oder Schwenkstellung durch das Handbedienteil 42 zur Anzeige beziehungsweise zur Vermittlung an den Bediener gebracht wurde, möglich.

Des Weiteren ist bei einer beispielhaften Ausführungsform vorgesehen, dass die Steuereinrichtung 26 zur Rückmeldung eines Einschaltzustands, also der Versorgung der Steuereinrichtung 26 mit Steuerspannung aus der Spannungsquelle 36, an das Handbedienteil 42 ausgebildet ist. Dieser Einschaltzustand wird dann an dem Handbedienteil 42 wiederrum visuell über das Display 54 oder akustisch oder durch Vibration zur Anzeige gebracht. Erst nach Erhalt dieser Rückmeldung des Einschaltzustands an das Handbedienteil 42 ist das Handbedienteil 42 zur Fernsteuerung der Steuereinrichtung 26 nutzbar.

Wie in Figur 3 dargestellt ist im Bereich des Fahrerhauses 32, und zwar vorzugsweise innerhalb des Fahrerhauses 32 eine Prüfeinrichtung 60 vorgesehen, die zur Feststellung ausgebildet ist, ob sich das Handbedienteil 42 in einem Nahbereich dieser Prüfeinrichtung 60 befindet. Die Prüfeinrichtung 60 kann als eine Aufnahmeeinrichtung 62 zur körperlichen Aufnahme des Handbedienteils 42 ausgebildet sein. Es kann sich dabei beispielsweise um eine Aufnahmestation oder -schale handeln, in die das Handbedienteil körperlich physikalisch einlegbar ist, so dass beispielsweise auch dessen Akkus über die Aufnahmeeinrichtung 62 aufgeladen werden können, was aber lediglich eine beispielhafte Ausgestaltung darstellt. Die Feststellung, ob sich das Handbedienteil 42 in einem Nahbereich der Prüfeinrichtung 60 befindet kann in an sich beliebiger Weise, beispielsweise über elektrische Kontakte oder vorzugsweise über drahtlose Kommunikation, insbesondere Transpondertechnik oder Funk oder Infrarot erfolgen. Die Prüfeinrichtung 60 ist erfindungsgemäß so ausgebildet, dass darin eine Autorisierungsinformation abgelegt ist, welche auch in der Steuereinrichtung 26 abgelegt ist, was insbesondere werksseitig bei der Installation der Hubladebühne oder auch zu einem späteren Zeitpunkt eingegeben worden sein kann. Bei dieser Autorisierungsinformation kann es sich um eine an sich beliebige Informationen im Sinne eines Codes handeln. Vorzugsweise handelt es sich um eine identifizierende Information oder Kennung der Prüfeinrichtung 60 oder um eine identifizierende Information oder Kennung der Steuereinrichtung 26, die bei beiden Einrichtungen ja eindeutig bekannt und festgelegt ist. Es kann sich insbesondere um deren Hardware-Adresse, insbesondere in Form der MAC-Adresse (Media-Access-Control-Adresse) oder um eine beliebige Serialnummer handelt, die in einem EEPROM der jeweiligen Einrichtung abgelegt ist. Die Prüfeinrichtung 60 und das Handbedienteil 42 sind weiter erfindungsgemäß so ausgebildet, dass die Autorisierungsinformation von der Prüfeinrichtung 60 an das Handbedienteil 46 automatisch übergeben wird, wenn mittels der Prüfeinrichtung 60 festgestellt wird, dass sich das Handbedienteil 42 im Nahbereich der Prüfeinrichtung 60 befindet. Dies kann wiederum über elektrische Kontakte oder über drahtlose Kommunikation erfolgen.

Weiter ist erfindungsgemäß vorgesehen, dass hieran anschließend automatisch oder initiiert durch eine Bedienung durch den Benutzer diese Autorisierungsinformation von dem Handbedienteil 42 durch drahtlose Kommunikation an das Sende/Empfangsteil 44 der Steuereinrichtung 26 übermittelt wird. Die Steuereinrichtung 26 überprüft dann, ob die drahtlos übermittelte Autorisierungsinformation mit der bei ihr abgelegten Autorisierungsinformation übereinstimmt. Wenn dies der Fall ist, so wird automatisch eine Kopplung des Sende/Empfangsteils 44 der Steuereinrichtung 26 mit dem Handbedienteil 42 ausgeführt, derart dass das Handbedienteil 42 als zur Ausführung von Fernsteuerungsmaßnahmen autorisiertes Gerät angesehen wird. Hierfür wird eine Identifizierungsinformation oder identifizierende Kennung des Handbedienteils 42 bei der Steuereinrichtung 26 abgelegt, so dass bei einer nachfolgenden durch das Handbedienteil 42 initiierten drahtlosen Kommunikation das Handbedienteil 42 als zur Ausführung von Fernsteuerungsmaßnahmen autorisiertes Gerät erkannt und von Seiten der Steuereinrichtung 26 zugelassen wird.

Die Steuereinrichtung 26 und das Handbedienteil 42 sind weiter so ausgebildet, dass zu ein und derselben Zeit immer nur ein Handbedienteil mit der Steuereinrichtung 26 bzw. deren Sende/Empfangsteil 44 gekoppelt sein kann. Wird in der vorstehend beschriebenen Weise eine Autorisierungsinformation von einem anderen Handbedienteil zusammen mit dessen Identifizierungsinformation an die Steuereinrichtung 26 übertragen, so wird die zuvor hinterlegte Identifizierungsinformation des zuvor gekoppelten Handbedienteils in der Steuereinrichtung 26 überschrieben.

Mit der Erfindung wird es möglich, dass mehrere Bedienpersonen jeweils mit einem Handbedienteil ausgestattet werden, so dass sie dieses Handbedienteil stets bei sich führen können, ohne dass die Notwendigkeit einer Rückgabe an eine Fuhrparkleitung oder zentrale Verwaltung besteht. Wenn eine Bedienperson dann einem Kraftfahrzeug zugeordnet wird und demzufolge Zugang zum abschließbaren Fahrerhaus 32 des Kraftfahrzeugs nimmt, so kann sie ihr Handbedienteil 42 in den Nahbereich der Prüfeinrichtung 60 bringen, insbesondere in die Aufnahmeeinrichtung 62 innerhalb des Fahrerhauses 32 einlegen, mit der Folge, dass die Prüfeinrichtung 60 die bei ihr gespeicherte Autorisierungsinformation an das Handbedienteil 42 übermittelt und in der Folge eine Kopplung des Handbedienteils 42 mit der Steuereinrichtung 26 bzw. deren Sende/Empfangsteil 44 der Hubladebühne in der vorstehend beschriebenen Weise vorzugsweise automatisch ausgeführt wird. Dabei wird dann die Identifizierungsinformation dieses spezifischen Handbedienteils 42 der Bedienperson in der Steuereinrichtung 26 abgelegt und eine dort gegebenenfalls zuvor gespeicherte Identifizierungsinformation eines anderen Handbedienteils gelöscht bzw. überschrieben. Obschon die Ausführung der Kopplung zwischen dem Handbedienteil 42 und der Steuereinrichtung 26 der Hubladebühne über drahtlose Kommunikation erfolgt, besteht nicht die Gefahr, dass eine Kopplung mit einer Steuereinrichtung eines anderen beispielsweise daneben abgestellten Kraftfahrzeugs irrtümlich ausgeführt wird, da ja die Autorisierungsinformation, die von der Prüfeinrichtung 60 an das Handbedienteil 42 übertragen wurde, nur in der Steuereinrichtung 26 der Hubladebühne des korrekt zugeordneten Kraftfahrzeugs vorhanden ist.

Die erwähnte Einschaltung der Versorgung der Steuereinrichtung 26 mit Steuerspannung und damit die Betriebsbereitschaft der Hubladebühne ist zu unterscheiden von einer Fernsteuerung der Steuereinrichtung 26 zur aktiven Ansteuerung, das heißt zum Verstellen des Hub- und Schwenkwerks 8. Nach einem weiteren Erfindungsgedanken ist diese aktive Ansteuerung, das heißt die Verstellung des Hub- und Schwenkwerks 8, mittels Fernsteuerung durch das Handbedienteil 42 vom Fahrerhaus des Kraftfahrzeugs aus nur dann möglich, wenn die Anwesenheit des Handbedienteils 42 durch die Prüfeinrichtung 60 im Fahrerhaus 32 festgestellt ist. Insbesondere ist dies nur dann möglich, wenn sich das Handbedienteil 42 im Nahbereich der Prüfeinrichtung 60 befindet.

Aus Figur 3 ist eine weitere vorteilhafte und beispielhafte Ausbildung ersichtlich, wonach der Hubladebühne eine Rückfahrkamera 70 zugeordnet ist, welche mit der Steuereinrichtung 26 derart zusammenwirkt, dass ein aktivierter Betriebszustand der Rückfahrkamera 70 an die Steuereinrichtung 26 übermittelt wird, insbesondere nur als digitales Signal "ein/aus". Von der Steuereinrichtung 26 wird dieser aktivierter Betriebszustand über die Fernbedienung 40 an das Handbedienteil 42 übermittelt und dort dahingehend verarbeitet, dass eine Fernsteuerung mittels des Handbedienteils 42 vom Fahrerhaus 32 des Kraftfahrzeugs aus nur dann möglich ist, wenn der aktivierte Betriebszustand der Rückfahrkamera 70 an das Handbedienteil 42 weitergeleitet wurde. Das eigentliche Bildsignal der Rückfahrkamera 70 wird typischerweise über andere Signalverbindungen an einem Kameradisplay im Fahrerhaus 32 visuell wahrnehmbar zur Anzeige gebracht.

Vorteilhafterweise kann weiter folgendes vorgesehen sein: Wenn das Handbedienteil 42 außerhalb des Fahrerhauses 32 zur Fernsteuerung der Steuereinrichtung 26 eingesetzt werden soll, so kommt eine Einrichtung 74 zur Nahbereichserkennung zum Einsatz, die in Figur 2 und 3 schematisch angedeutet ist. Mittels dieser Einrichtung 74 ist feststellbar, ob sich das Handbedienteil 42 innerhalb einer vorbestimmten Distanz zu dem Hub- und Schwenkwerk 8 oder innerhalb einer vorbestimmten Signalstärke zwischen den Sende-/Empfangseinrichtungen 46, 48 befindet. Nur wenn dies der Fall ist kann mittels des Handbedienteils 42 die Versorgung der Steuereinrichtung 26 mit Steuerspannung und die Fernsteuerung der Steuereinrichtung 26 zum Zwecke der Verstellung des Hub- und Schwenkwerks 8 mittels des Handbedienteils 42 von außerhalb des Fahrerhauses 32 ausgeführt werden.

Weiterhin erweist es sich bei einer beispielhaften Ausbildung als vorteilhaft, wenn die eingangs erwähnte Prüfeinrichtung 60 mit einer Startunterbrechungseinrichtung 80 des Kraftfahrzeugs zusammenwirkt derart, dass die Startunterbrechungseinrichtung 80 automatisch erst dann deaktiviert wird, wenn das Handbedienteil 42 sich im Fahrerhaus 32 befindet, also mitgeführt wird, und dies von der Prüfeinrichtung 60 automatisch festgestellt wurde. Auf diese Weise wird eine Verliersicherung für das Handbedienteil 42 realisiert.

## Patentansprüche

1. Hubladebühne (2) bei einem Kraftfahrzeug, mit einem durch Anschlusskomponenten (18) an das Kraftfahrzeug montierbaren Hub- und Schwenkwerk (8), welches motorisch, insbesondere hydraulisch antreibbar ist, mit einer durch das Hub- und Schwenkwerk (8) heb- und senkbaren Plattform (6), die in allen Hubstellungen in einer gewählten Lage haltbar ist, wobei die Plattform (6) außerdem im auf Niveau eines Laderaums des Kraftfahrzeugs angehobenen Zustand von einer horizontalen Schwenkstellung in eine vertikale Schwenkstellung schwenkbar ist, in der sie den Laderaum des Kraftfahrzeugs verschließt oder hinter einer den Laderaum verschließenden Tür positioniert ist, und umgekehrt von der vertikalen Schwenkstellung in die horizontale Schwenkstellung schwenkbar ist, oder wobei die Plattform (6) in eine Verstaustellung unterhalb des Laderaums des Kraftfahrzeugs bringbar ist und hierbei zueinander schwenkbare Plattformbereiche gegeneinander verschwenkt und gefaltet werden, und mit einem Antrieb für das Hub-und Schwenkwerk (8), und mit einer elektrischen oder elektronischen Steuereinrichtung (26) mittels derer das Heben und Senken und Verschwenken der Plattform (6) oder von Plattformteilen gesteuert wird, und mit einer Fernbedienung (40) zur Fernsteuerung der Steuereinrichtung (26) auf Basis drahtloser und insbesondere digital codierter Kommunikation mit wenigstens einem und vorzugsweise mehreren durch Bedienpersonen mitführbaren Handbedienteilen (42) mit einer jeweiligen das Handbedienteil individualisierenden Identifizierungsinformation und mit einem der Steuereinrichtung (26) zugeordneten Sende/Empfangsteil (44), wobei das jeweilige Handbedienteil (42) und das Sende/Empfangsteil (44) Sende-/Empfangseinrichtungen (46, 48) umfassen, die ausgebildet sind, miteinander drahtlos zu kommunizieren, **dadurch gekennzeichnet, dass** eine im Bereich des Fahrerhauses (32) des Kraftfahrzeugs angeordnete Prüfeinrichtung (60) vorgesehen ist, die zur Feststellung ausgebildet ist, ob sich ein Handbedienteil (42) in einem Nahbereich der Prüfeinrichtung (60) befindet, und
dass in der Prüfeinrichtung (60) und in der Steuereinrichtung (26) eine gemeinsame Autorisierungsinformation, insbesondere werksseitig, ablegbar ist, und
dass die Prüfeinrichtung (60) und das Handbedienteil (42) derart zusammenwirken dass diese Autorisierungsinformation von der Prüfeinrichtung (60) an das Handbedienteil (42) automatisch übergeben wird, wenn sich das Handbedienteil (42) in dem Nahbereich der Prüfeinrichtung (60) befindet,
und dass das Handbedienteil (42) zur drahtlosen Übermittlung der Autorisierungsinformation und einer das Handbedienteil (42) individualisierenden Identifizierungsinformation an das Sende/Empfangsteil (44) der Steuereinrichtung (26) ausgebildet ist und dass die Steuereinrichtung (26) zur Überprüfung ausgebildet ist, ob die drahtlos übermittelte Autorisierungsinformation mit der bei ihr abgelegten Autorisierungsinformation übereinstimmt, und dass die Steuereinrichtung (26) in diesem Fall eine automatische Kopplung des Sende/Empfangsteils (44) mit dem Handbedienteil (42) ausführt, derart dass das Handbedienteil (42) als zur Ausführung von Fernsteuerungsmaßnahmen autorisiertes Gerät angesehen wird.

2. Hubladebühne nach Anspruch 1, **dadurch gekennzeichnet, dass** die Autorisierungsinformation eine identifizierende Kennung der Prüfeinrichtung (60) oder eine identifizierende Kennung der Steuereinrichtung (26) ist.

3. Hubladebühne nach Anspruch 1 oder 2, **dadurch gekennzeichnet, dass** die Steuereinrichtung (26) und das Handbedienteil (42) so ausgebildet sind, dass die Steuereinrichtung (26) und deren Sende/Empfangsteil (44) zu einer Zeit nur mit einem einzigen Handbedienteil (42) gekoppelt sein kann derart, dass dieses Handbedienteil (42) als zur Ausführung von Fernsteuerungsmaßnahmen autorisiertes Gerät angesehen wird.

4. Hubladebühne nach Anspruch 1, 2 oder 3, **dadurch gekennzeichnet, dass** die Prüfeinrichtung (60) eine Aufnahmeeinrichtung (62) zur körperlichen Aufnahme des Handbedienteils (42) umfasst.

5. Hubladebühne nach einem oder mehreren der vorstehenden Ansprüche, **dadurch gekennzeichnet, dass** die Prüfeinrichtung (60) ausgebildet ist, über elektrische Kontakte oder über drahtlose Kommunikation, insbesondere Transpondertechnik oder Funk oder Infrarot, festzustellen, ob sich ein Handbedienteil (42) in dem Nahbereich der Prüfeinrichtung befindet.

6. Hubladebühne nach einem oder mehreren der vorstehenden Ansprüche, **dadurch gekennzeichnet, dass** die Prüfeinrichtung (60) ausgebildet ist, über elektrische Kontakte oder über drahtlose Kommunikation, insbesondere Transpondertechnik oder Funk oder Infrarot, mit dem Handbedienteil (42) zu kommunizieren, um die Autorisierungsinformationen von der Prüfeinrichtung an das Handbedienteil zu übergeben.

7. Hubladebühne nach einem oder mehreren der vorstehenden Ansprüche, **dadurch gekennzeichnet, dass** die Prüfeinrichtung (60) in einem abschließbaren Fahrerhaus (32) des Kraftfahrzeugs angeordnet ist, so dass sie nur für eine autorisierte Bedienperson zugänglich ist.

8. Hubladebühne nach einem oder mehreren der vorstehenden Ansprüche, **dadurch gekennzeichnet, dass** das Handbedienteil (42) ausgebildet ist, eine Versorgung der Steuereinrichtung (26) mit Steuerspannung und damit die Betriebsbereitschaft der Hubladebühne einzuschalten und vorzugsweise auch wieder auszuschalten, sobald die Kopplung des Handbedienteils (42) mit dem Sende/Empfangsteil (44) der Steuereinrichtung (26) ausgeführt ist.

9. Hubladebühne nach einem oder mehreren der vorstehenden Ansprüche, **gekennzeichnet durch** eine mit der Steuereinrichtung (26) zusammenwirkende Einrichtung (50) zur Erfassung der Hub-und/oder Schwenkstellung der Plattform (6) und **dadurch, dass** die Steuereinrichtung (26) zur Meldung der Hub- und/oder Schwenkstellung der Plattform (6) an das Handbedienteil (42) mittels Kommunikation über die Fernbedienung (40) ausgebildet ist und dass die Hub-und/oder Schwenkstellung der Plattform (6) an dem Handbedienteil (42) visuell und/oder akustisch anzeigbar oder durch Vibration vermittelbar ist.

10. Verfahren zum Betreiben einer Hubladebühne (2) bei einem Kraftfahrzeug, mit einem durch Anschlusskomponenten (18) an das Kraftfahrzeug montierbaren Hub- und Schwenkwerk (8), welches motorisch, insbesondere hydraulisch antreibbar ist, mit einer durch das Hub- und Schwenkwerk (8) heb- und senkbaren Plattform (6), die in allen Hubstellungen in einer gewählten Lage haltbar ist, wobei die Plattform (6) außerdem im auf Niveau eines Laderaums des Kraftfahrzeugs angehobenen Zustand von einer horizontalen Schwenkstellung in eine vertikale Schwenkstellung schwenkbar ist, in der sie den Laderaum des Kraftfahrzeugs verschließt oder hinter einer den Laderaum verschließenden Tür positioniert ist, und umgekehrt von der vertikalen Schwenkstellung in die horizontale Schwenkstellung schwenkbar ist, oder wobei die Plattform (6) in eine Verstaustellung unterhalb des Laderaums des Kraftfahrzeugs bringbar ist und hierbei zueinander schwenkbare Plattformbereiche gegeneinander verschwenkt und gefaltet werden, und mit einem Antrieb für das Hub-und Schwenkwerk (8), und mit einer elektrischen oder elektronischen Steuereinrichtung (26) mittels derer das Heben und Senken und Verschwenken der Plattform (6) oder von Plattformteilen gesteuert wird, und mit einer Fernbedienung (40) zur Fernsteuerung der Steuereinrichtung (26) auf Basis drahtloser und insbesondere digital codierter Kommunikation mit wenigstens einem und vorzugsweise mehreren durch Bedienpersonen mitführbaren Handbedienteilen (42) mit einer jeweiligen das Handbedienteil (42) individualisierenden Identifizierungsinformation und mit einem der Steuereinrichtung (26) zugeordneten Sende/Empfangsteil (44), wobei das jeweilige Handbedienteil (42) und das Sende/Empfangsteil (44) Sende-/Empfangseinrichtungen (46, 48) umfassen, die ausgebildet sind, miteinander drahtlos zu kommunizieren, **dadurch gekennzeichnet, dass** mittels einer im Bereich des Fahrerhauses des Kraftfahrzeugs angeordneten Prüfeinrichtung (60) überprüft wird, ob sich ein Handbedienteil (42) in einem Nahbereich der Prüfeinrichtung (60) befindet, und
dass eine in der Prüfeinrichtung (60), insbesondere werksseitig, abgelegte Autorisierungsinformation von der Prüfeinrichtung (60) an das Handbedienteil (42) automatisch übergeben wird, wenn sich das Handbedienteil (42) in dem Nahbereich der Prüfeinrichtung (60) befindet, wobei diese Autorisierungsinformation auch in der Steuereinrichtung (26) abgelegt ist,
und dass daraufhin die Autorisierungsinformation und eine das Handbedienteil (42) individualisierende Identifizierungsinformation, vorzugsweise automatisch, von dem Handbedienteil (42) durch drahtlose Kommunikation an das Sende/Empfangsteil (44) der Steuereinrichtung (26) übermittelt wird,
und dass mittels der Steuereinrichtung (26) überprüft wird, ob die drahtlos übermittelte Autorisierungsinformation mit der bei ihr abgelegten Autorisierungsinformation übereinstimmt, und dass in diesem Fall eine automatische Kopplung des Sende/Empfangsteils (44) mit dem Handbedienteil (42) ausgeführt wird, derart dass das Handbedienteil (42) als ein zur Ausführung von Fernsteuerungsmaßnahmen autorisiertes Gerät angesehen wird.

11. Verfahren nach Anspruch 10, **dadurch gekennzeichnet, dass** die Kopplung des Sende/Empfangsteils (44) der Steuereinrichtung (26) mit dem Handbedienteil (42) umfasst, dass eine das Handbedienteil (42) individualisierende Identifizierungsinformation in der Steuereinrichtung (26) abgelegt wird.

12. Verfahren nach Anspruch 10 oder 11, **dadurch gekennzeichnet, dass** beim Ausführen einer Kopplung des Sende/Empfangsteils (44) der Steuereinrichtung (26) mit einem Handbedienteil (42) eine zuvor bestehende Kopplung mit einem anderen Handbedienteil gelöscht wird, insbesondere eine zuvor abgelegte Identifizierungsinformation des anderen Handbedienteils mit der Identifizierungsinformation des aktuell zu koppelnden Handbedienteils (42) überschrieben wird.

13. Verfahren nach Anspruch 10, 11 oder 12, **dadurch gekennzeichnet, dass** die Autorisierungsinformation eine identifizierende Kennung der Prüfeinrichtung (60) oder eine identifizierende Kennung der Steuereinrichtung (26) ist.

14. Verfahren nach einem oder mehreren der Ansprüche 10-13, **dadurch gekennzeichnet, dass** über elektrische Kontakte der Prüfeinrichtung (60) und des Handbedienteils (42) oder über drahtlose Kommunikation, insbesondere Transpondertechnik oder Funk oder Infrarot, zwischen der Prüfeinrichtung (60) und dem Handbedienteil (42) festgestellt wird, ob sich das Handbedienteil (42) in dem Nahbereich der Prüfeinrichtung (60) befindet.

15. Verfahren nach einem oder mehreren der Ansprüche 10-14, **dadurch gekennzeichnet, dass** die Autorisierungsinformation über elektrische Kontakte der Prüfeinrichtung (60) und des Handbedienteils (42) oder über drahtlose Kommunikation, insbesondere Transpondertechnik oder Funk oder Infrarot, von der Prüfeinrichtung an das Handbedienteil übergeben wird.

16. Verfahren nach einem oder mehreren der Ansprüche 10-15, **dadurch gekennzeichnet, dass** ein Benutzer zuerst Zugang zu einem abschließbaren Fahrerhaus (32) des Kraftfahrzeugs nimmt und ein von ihm mitgeführtes Handbedienteil (42) in einen Nahbereich der Prüfeinrichtung (60) verbringt und dass daraufhin mittels der Prüfeinrichtung (60) festgestellt wird, dass sich das Handbedienteil (42) im Nahbereich der Prüfeinrichtung (60) befindet.

## Claims

1. Tail lift (2) in a motor vehicle, comprising a lift and pivot mechanism (8) that can be mounted on the motor vehicle by means of connecting components (18), which mechanism can be motor driven, in particular hydraulically driven, comprising a platform (6) which can be raised and lowered by means of the lift and pivot mechanism (8) and can be held in a selected position in all lifting positions, the platform (6), when raised to the level of a cargo space of the motor vehicle, also being pivotable from a horizontal pivoting position into a vertical pivoting position in which the platform closes the cargo space of the motor vehicle or is positioned behind a door which closes the cargo space, and conversely being pivotable from the vertical pivoting position into the horizontal pivoting position, or it being possible to bring the platform (6) into a stowed position below the cargo space of the motor vehicle, in which process mutually pivotable platform regions are pivoted with respect to one another and folded, and comprising a drive for the lift and pivot mechanism (8), and comprising an electric or electronic control device (26) by means of which the lifting and lowering and pivoting of the platform (6) or of platform parts is controlled, and comprising a remote control (40) for remotely controlling the control device (26) on the basis of wireless and in particular digitally coded communication with at least one and preferably a plurality of hand-held operating parts (42) which can be carried by operators and have relevant identification information which individualizes the hand-held operating part, and comprising a transmitting/receiving part (44) associated with the control device (26), the relevant hand-held operating part (42) and the transmitting/receiving part (44) comprising transmitting/receiving devices (46, 48) which are designed to communicate wirelessly with one another, **characterized in that** a test device (60) is provided which is arranged in the region of the driver's cab (32) of the motor vehicle and is designed to determine whether a hand-held operating part (42) is located in a vicinity of the test device (60), and
**in that** common authorization information can be stored in the test device (60) and in the control device (26), in particular at the factory, and
**in that** the test device (60) and the hand-held operating part (42) cooperate in such a way that this authorization information is automatically transferred from the test device (60) to the hand-held operating part (42) when the hand-held operating part (42) is in the vicinity of the test device (60),
and **in that** the hand-held operating part (42) is designed to wirelessly transmit the authorization information, and identification information which individualizes the hand-held operating part (42) to the transmitting/receiving part (44) of the control device (26), and **in that** the control device (26) is designed to check whether the wirelessly transmitted authorization information matches the authorization information stored in said control device, and **in that**, in this case, the control device (26) carries out an automatic coupling of the transmitting/receiving part (44) to the hand-held operating part (42) such that the hand-held operating part (42) is considered to be an apparatus which is authorized to carry out remote control actions.

2. Tail lift according to claim 1, **characterized in that** the authorization information is an identifying identifier of the test device (60) or an identifying identifier of the control device (26).

3. Tail lift according to claim 1 or 2, **characterized in that** the control device (26) and the hand-held operating part (42) are designed such that the control device (26) and the transmitting/receiving part (44) thereof can only be coupled to one single hand-held operating part (42) at a time, such that said hand-held operating part (42) is considered to be an apparatus which is authorized to carry out remote control actions.

4. Tail lift according to claim 1, 2 or 3, **characterized in that** the test device (60) comprises a receiving device (62) for physically receiving the hand-held operating part (42).

5. Tail lift according to one or more of the preceding claims, **characterized in that** the test device (60) is designed to determine whether a hand-held operating part (42) is in the vicinity of the test device by means of electrical contacts or wireless communication, in particular transponder technology or radio or infrared.

6. Tail lift according to one or more of the preceding claims, **characterized in that** the test device (60) is designed to communicate with the hand-held operating part (42) via electrical contacts or wireless communication, in particular transponder technology or radio or infrared, in order to transfer the authorization information from the test device to the hand-held operating part.

7. Tail lift according to one or more of the preceding claims, **characterized in that** the test device (60) is arranged in a lockable driver's cab (32) of the motor vehicle, such that said device is only accessible to an authorized operator.

8. Tail lift according to one or more of the preceding claims, **characterized in that** the hand-held operating part (42) is designed to turn on a supply of control voltage to the control device (26), and thus the operational readiness of the tail lift, and to preferably turn said supply off again as soon as the coupling of the hand-held operating part (42) to the transmitting/receiving part (44) of the control device (26) is carried out.

9. Tail lift according to one or more of the preceding claims, **characterized by** device (50) for detecting the lifting and/or pivoting position of the platform (6), which device cooperates with the control device (26), and in that the control device (26) is designed to report the lifting and/or pivoting position of the platform (6) to the hand-held operating part (42) by means of communication via the remote control (40), and in that the lifting and/or pivoting position of the platform (6) can be displayed visually and/or acoustically on the hand-held operating part (42), or can be communicated by vibrations.

10. Method for operating a tail lift (2) in a motor vehicle, comprising a lift and pivot mechanism (8) that can be mounted on the motor vehicle by means of connecting components (18), which mechanism can be motor driven, in particular hydraulically driven, comprising a platform (6) which can be raised and lowered by means of the lift and pivot mechanism (8) and can be held in a selected position in all lifting positions, the platform (6), when raised to the level of a cargo space of the motor vehicle, also being pivotable from a horizontal pivoting position into a vertical pivoting position in which the platform closes the cargo space of the motor vehicle or is positioned behind a door which closes the cargo space, and conversely being pivotable from the vertical pivoting position into the horizontal pivoting position, or it being possible to bring the platform (6) into a stowed position below the cargo space of the motor vehicle, in which process mutually pivotable platform regions are pivoted with respect to one another and folded, and comprising a drive for the lift and pivot mechanism (8), and comprising an electric or electronic control device (26) by means of which the lifting and lowering and pivoting of the platform (6) or of platform parts is controlled, and comprising a remote control (40) for remotely controlling the control device (26) on the basis of wireless and in particular digitally coded communication with at least one and preferably a plurality of hand-held operating parts (42) which can be carried by operators and have relevant identification information which individualizes the hand-held operating part (42), and comprising a transmitting/receiving part (44) associated with the control device (26), the relevant hand-held operating part (42) and the transmitting/receiving part (44) comprising transmitting/receiving devices (46, 48) which are designed to communicate wirelessly with one another, **characterized in that** by means of a test device (60) arranged in the region of the driver's cab of the motor vehicle it is checked whether a hand-held operating part (42) is located in a vicinity of the test device (60), and
**in that** authorization information which is stored in the test device (60), in particular at the factory, is automatically transferred from the test device (60) to the hand-held operating part (42) when the hand-held operating part (42) is in the vicinity of the test device (60), said authorization information also being stored in the control device (26),
and **in that** the authorization information, and identification information which individualizes the hand-held operating part (42) is then, preferably automatically, transmitted from the hand-held operating part (42) to the transmitting/receiving part (44) of the control device (26) by means of wireless communication, and **in that** whether the wirelessly transmitted authorization information matches the authorization information stored in said control device is checked by means of the control device (26),
and **in that**, in this case, an automatic coupling of the transmitting/receiving part (44) to the hand-held operating part (42) is carried out, such that the hand-held operating part (42) is considered to be an apparatus which is authorized to carry out remote control actions.

11. Method according to claim 10, **characterized in that** the coupling of the transmitting/receiving part (44) of the control device (26) to the hand-held operating part (42) comprises identification information which individualizes the hand-held operating part (42) being stored in the control device (26).

12. Method according to claim 10 or 11, **characterized in that**, when carrying out a coupling of the transmitting/receiving part (44) of the control device (26) to a hand-held operating part (42), a previously existing coupling to another hand-held operating part is deleted, in particular previously stored identification information of the other hand-held operating part is overwritten with the identification information of the current hand-held operating part (42) which is to be coupled.

13. Method according to claim 10, 11 or 12, **characterized in that** the authorization information is an identifying identifier of the test device (60) or is an identifying identifier of the control device (26).

14. Method according to one or more of claims 10-13, **characterized in that** whether the hand-held operating part (42) is in the vicinity of the test device (60) is determined by means of electrical contacts of the test device (60) and of the hand-held operating part (42), or by means of wireless communication, in particular transponder technology or radio or infrared, between the test device (60) and the hand-held operating part (42).

15. Method according to one or more of claims 10-14, **characterized in that** the authorization information is transferred from the test device to the hand-held operating part by means of electrical contacts of the test device (60) and of the hand-held operating part (42), or by means of wireless communication, in particular transponder technology or radio or infrared.

16. Method according to one or more of claims 10-15, **characterized in that** a user first accesses a lockable driver's cab (32) of the motor vehicle and takes a hand-held operating part (42), which is carried by said user, into a vicinity of the test device (60), and **in that** it is then determined by means of the test device (60) that the hand-held operating part (42) is in the vicinity of the test device (60).

## Revendications

1. Hayon élévateur (2) pour un véhicule à moteur, avec un mécanisme de levage et de pivotement (8) pouvant être monté sur le véhicule à moteur par l'intermédiaire de composants de connexion (18), qui peut être entraîné de manière motorisée, en particulier de manière hydraulique, avec une plate-forme (6) pouvant être levée et abaissée par l'intermédiaire du mécanisme de levage et de pivotement (8), qui peut être maintenue dans toutes les positions de levage dans une plage sélectionnée, dans lequel la plate-forme (6) peut également, dans un état levé au niveau d'un espace de chargement du véhicule à moteur, pivoter d'une position de pivotement horizontale jusque dans une position de pivotement verticale dans laquelle elle ferme l'espace de chargement du véhicule automobile ou est positionnée derrière une porte fermant l'espace de chargement, et inversement peut pivoter depuis la position de pivotement verticale jusque dans la position de pivotement horizontale, ou dans lequel la plate-forme (6) peut être amenée dans une position repliée sous l'espace de chargement du véhicule à moteur, et ainsi des zones de plate-forme pouvant pivoter mutuellement sont pivotées et repliées mutuellement, et avec un entraînement pour le mécanisme de levage et de pivotement (8), et avec un dispositif de commande électrique ou électronique (26) au moyen duquel le levage, l'abaissement et le pivotement de la plate-forme (6) ou de parties de plate-forme sont commandés, et avec une télécommande (40) pour une commande à distance du dispositif de commande (26) sur la base d'une communication sans fil et en particulier codée numériquement avec au moins une et de préférence plusieurs parties de commande manuelle (42) pouvant être portées par des opérateurs avec une information d'identification individualisant la partie de la commande manuelle, et avec une partie d'émission/de réception (44) associée au dispositif de commande (26), dans lequel la partie de commande manuelle respective (42) et la partie d'émission/de réception (44) présentent des dispositifs d'émission/de réception (46, 48), qui sont adaptés pour communiquer entre eux sans fil, **caractérisé en ce qu'**un dispositif de test (60) est prévu, agencé dans la zone de la cabine de conduite (32) du véhicule à moteur, qui est conçu pour déterminer si une partie de commande manuelle (42) est située à proximité du dispositif de test (60), et
**en ce que** dans le dispositif de test (60) et dans le dispositif de commande (26) peut être stockée une information d'autorisation commune, en particulier en usine, et
**en ce que** le dispositif de test (60) et l'unité de commande manuelle (42) coopèrent de manière à ce que cette information d'autorisation soit automatiquement transférée du dispositif de test (60) à l'unité de commande manuelle (42), lorsque l'unité de commande manuelle (42) est située à proximité du dispositif de test (60),
et **en ce que** la partie de commande manuelle (42) destinée à transmettre sans fil l'information d'autorisation et l'information d'identification individualisant la partie de commande manuelle (42) est formée sur la partie d'émission/de réception (44) du dispositif de commande (26) et **en ce que** le dispositif de commande (26) est conçu pour vérifier si l'information d'autorisation transmise sans fil correspond à l'information d'autorisation stockée par celui-ci, et **en ce que** le dispositif de commande (26) exécute dans ce cas un couplage automatique de la partie d'émission/réception (44) avec la partie commande manuelle (42), de sorte que la partie de commande manuelle (42) est considérée comme un dispositif autorisé à exécuter des opérations de commande à distance.

2. Hayon élévateur selon la revendication 1, **caractérisé en ce que** l'information d'autorisation est un identifiant d'identification du dispositif de test (60) ou un identifiant d'identification du dispositif de commande (26) .

3. Hayon élévateur selon la revendication 1 ou 2, **caractérisé en ce que** le dispositif de commande (26) et la partie de commande manuelle (42) sont conçus pour que le dispositif de commande (26) et sa partie d'émission/de réception (44) puissent être couplés à un moment avec une partie de commande manuelle (42) unique, de sorte que cette partie de commande manuelle (42) est considérée comme un dispositif autorisé à exécuter des opérations de commande à distance.

4. Hayon élévateur selon la revendication 1, 2 ou 3, **caractérisé en ce que** le dispositif de test (60) présente un dispositif de réception (62) destiné à recevoir physiquement la partie de commande manuelle (42).

5. Hayon élévateur selon une ou plusieurs des revendications précédentes, **caractérisé en ce que** le dispositif de test (60) est conçu pour déterminer, via des contacts électriques ou via une communication sans fil, en particulier par transpondeur ou par radio ou infrarouge, si une unité de commande manuelle (42) est située à proximité du dispositif de test.

6. Hayon élévateur selon une ou plusieurs des revendications précédentes, **caractérisé en ce que** le dispositif de test (60) est conçu, via des contacts électriques ou via une communication sans fil, en particulier par transpondeur ou par radio ou infrarouge, pour communiquer avec la partie de commande manuelle (42) afin de transmettre les informations d'autorisation provenant du dispositif de test.

7. Hayon élévateur selon une ou plusieurs des revendications précédentes, **caractérisé en ce que** le dispositif de test (60) est agencé dans une cabine de conduite (32) du véhicule à moteur, de sorte qu'il n'est accessible qu'à un opérateur autorisé.

8. Hayon élévateur selon une ou plusieurs des revendications précédentes, **caractérisé en ce que** la partie de commande manuelle (42) est conçue pour alimenter le dispositif de commande (26) avec une tension de commande et ainsi pour rendre le hayon élévateur opérationnel et, de préférence, une déconnexion dès l'exécution du couplage de la partie de commande manuelle (42) avec la partie d'émission/de réception (44) du dispositif de commande (26).

9. Hayon élévateur selon une ou plusieurs des revendications précédentes, **caractérisé par** un dispositif (50) coopérant avec le dispositif de commande (26) pour détecter la position de levage et/ou de pivotement de la plate-forme (6), et **caractérisé en ce que** le dispositif de commande (26) est conçu pour signaler la position de levage et/ou de pivotement de la plate-forme (6) à la partie de commande manuelle (42) au moyen d'une communication via la télécommande (40), et **en ce que** la position de levage et/ou de pivotement de la plate-forme (6) peut être affichée sur la partie de commande manuelle (42) de manière visuelle et/ou acoustique ou peut être transmise par des vibrations.

10. Procédé pour faire fonctionner un hayon élévateur (2) pour un véhicule à moteur, avec un mécanisme de levage et de pivotement (8) pouvant être monté sur le véhicule à moteur par l'intermédiaire de composants de connexion (18), qui peut être entraîné de manière motorisée, en particulier de manière hydraulique, avec une plate-forme (6) pouvant être levée et abaissée par l'intermédiaire du mécanisme de levage et de pivotement (8), qui peut être maintenue dans toutes les positions de levage dans une plage sélectionnée, dans lequel la plate-forme (6) peut également, dans un état levé au niveau d'un espace de chargement du véhicule à moteur, pivoter d'une position de pivotement horizontale jusque dans une position de pivotement verticale dans laquelle elle ferme l'espace de chargement du véhicule automobile ou est positionnée derrière une porte fermant l'espace de chargement, et inversement peut pivoter depuis la position de pivotement verticale jusque dans la position de pivotement horizontale, ou dans lequel la plate-forme (6) peut être amenée dans une position repliée sous l'espace de chargement du véhicule à moteur, et ainsi des zones de plate-forme pouvant pivoter mutuellement sont pivotées et repliées mutuellement, et avec un entraînement pour le mécanisme de levage et de pivotement (8), et avec un dispositif de commande électrique ou électronique (26) au moyen duquel le levage, l'abaissement et le pivotement de la plate-forme (6) ou de parties de plate-forme sont commandés, et avec une télécommande (40) pour une commande à distance du dispositif de commande (26) sur la base d'une communication sans fil et en particulier codée numériquement avec au moins une et de préférence plusieurs parties de commande manuelle (42) pouvant être portées par des opérateurs avec une information d'identification individualisant la partie de la commande manuelle, et avec une partie d'émission/de réception (44) associée au dispositif de commande (26), dans lequel la partie de commande manuelle respective (42) et la partie d'émission/de réception (44) présentent des dispositifs d'émission/de réception (46, 48), qui sont adaptés pour communiquer entre eux sans fil, **caractérisé en ce qu'**un dispositif de test (60) agencé dans la zone de la cabine de conduite du véhicule à moteur va permettre de tester si une partie de commande manuelle (42) est située à proximité du dispositif de test (60), et
**en ce qu'**une information d'autorisation stockée dans le dispositif de test (60), en particulier en usine, est transférée automatiquement du dispositif de test (60) à la partie de commande manuelle (42) lorsque la partie de commande manuelle (42) est située à proximité du dispositif de test (60), dans lequel cette information d'autorisation est également stockée dans le dispositif de commande,
et en que l'information d'autorisation et une information d'identification individualisant la partie de commande manuelle (42), de préférence automatiquement, sont ensuite transmises de la partie de commande manuelle (42) par communication sans fil à la partie d'émission/de réception (44) du dispositif de commande (26),
et **en ce que** le dispositif de commande (26) va tester si l'information d'autorisation transmise sans fil correspond à l'information d'autorisation stockées par celui-ci, et **en ce que** dans ce cas, un couplage automatique de la partie d'émission/de réception (44) avec la partie de commande manuelle (42) est exécuté, de telle sorte que la partie de commande manuelle (42) est considérée comme un dispositif autorisé à exécuter des opérations de commande à distance.

11. Procédé selon la revendication 10, **caractérisé en ce que** le couplage de la partie d'émission/de réception (44) du dispositif de commande (26) avec la partie de commande manuelle (42) inclut qu'une information d'identification individualisant la partie de commande manuelle (42) est stockée dans le dispositif de commande (26).

12. Procédé selon la revendication 10 ou 11, **caractérisé en ce que** lors de l'exécution du couplage de la partie d'émission/réception (44) du dispositif de commande (26) avec une partie de commande manuelle (42), un couplage existant préalablement avec une autre partie de commande manuelle est supprimé, en particulier une information d'identification préalablement stockée de l'autre partie de commande manuelle est écrasée par l'information d'identification de la partie de commande manuelle actuelle (42) à coupler.

13. Hayon élévateur selon la revendication 10, 11 ou 12, **caractérisé en ce que** l'information d'autorisation est un identifiant d'identification du dispositif de test (60) ou un identifiant d'identification du dispositif de commande (26).

14. Procédé selon une ou plusieurs des revendications 10 à 13, **caractérisé en ce que** des contacts électriques du dispositif de test (60) et de la partie de commande manuelle (42), ou une communication sans fil, en particulier par transpondeur ou par radio ou par infrarouge, entre le dispositif de test (60) et la partie de commande manuelle (42) vont permettre de déterminer si la partie de commande manuelle (42) est située à proximité du dispositif de test (60).

15. Procédé selon une ou plusieurs des revendications 10 à 14, **caractérisé en ce que** l'information d'autorisation est transmise via des contacts électriques du dispositif de test (60) et de la partie de commande manuelle (42), ou via une communication sans fil, en particulier par transpondeur ou par radio ou par infrarouge, entre le dispositif de test et la partie de commande manuelle.

16. Procédé selon une ou plusieurs des revendications 10 à 15, **caractérisé en ce qu'**un utilisateur accède d'abord à une cabine de conduite verrouillable (32) du véhicule à moteur et amène une partie de commande manuelle (42) qu'il porte avec lui à proximité du dispositif de test (60), puis détermine à l'aide du dispositif de test (60) si la partie de commande manuelle (42) est située à proximité du dispositif de test (60).
